# EUROPEAN PATENT APPLICATION

(11) **EP 4 563 296 A1**
(43) Date of publication of application: **04.06.2025**
(21) Application number: 24202431.3
(22) Date of filing: 25.09.2024
(51) Int. Cl.: B25J 9/16, B29C 70/38, G05B 19/4099

(54) **METHODS FOR OPERATION OF LAYUP CELL DURING COMPOSITE MANUFACTURING AND ASSOCIATED LAYUP CELLS**

(30) Priority: 29.11.2023 US 202363603692 P; 22.01.2024 NL 2036865
(71) Applicant: The Boeing Company, Arlington, VA 22202 (US); University of Southern California, Los Angeles, CA 90007 (US); 3M Innovative Properties Company, Irvine, CA 92614 (US)
(72) Inventor: Johnson, Brice A., ARLINGTON, 22202 (US); Smith, Brian J., ARLINGTON, 22202 (US); Heng, Sangvavann, ARLINGTON, 22202 (US); Brown, Christopher R., ARLINGTON, 22202 (US); Zgherea, Lisa C., ARLINGTON, 22202 (US); Wienhold, Erik N., ARLINGTON, 22202 (US); Fritzke, Ricardo A., ARLINGTON, 22202 (US); Gupta, Satyandra Kumar, LOS ANGELES, 90089 (US); Kanyuck, Alec Christopher, LOS ANGELES, 90089 (US); Sidana, Kshitij, LOS ANGELES, 90007 (US); Simpson, Marc G., IRVINE, 92614 (US)
(74) Representative: Arnold & Siedsma

(57) **Abstract**

A method for operation of a layup cell during composite manufacturing includes running a compaction application program at a robot control system of the layup cell using a path plan data file defining a path plan for automated manipulation of a compaction roller for compacting a ceramic matrix composite ply on a layup tool. The method further comprises running a re-compaction path planning application program at the robot control system of the layup cell based on one or more areas of the ceramic matrix composite ply that require re-compaction, storing the re-compaction path plan in a re-compaction path plan data file; and running the compaction application program at the robot control system using the re-compaction path plan for automated maneuvering of the compaction roller and performing the re-compaction. A corresponding layup cell including a layup tool and a robot control system, a robotic arm and at least one end effector is also part of the invention.

## Description

The present disclosure relates generally to the use of path plans for rollout compaction of composite plies during composite manufacturing and, particularly, for rollout compaction of ceramic matrix composite plies. The path plans are designed for implementation using automated compaction rollers in a composite manufacturing layup cell. For example, the layup cell may be equipped with surface imaging technology to identify areas of the ceramic matrix composite ply that may require re-compaction after the initial compaction. Generation of re-work path plans for automated rework of the initial compaction is also contemplated. The path plans and the surface imaging technology have applications relating to various industries and products such as aircraft as well as other types of vehicles and transportation equipment. Applications in the manufacture of various other types of products with composite parts are also contemplated.

Currently, compaction of ceramic matrix composite plies on layup tools is a manual operation performed using compaction roller hand tools. Existing manual compaction operations also include the use of sweeps, hand pressure and vacuum bags, generally ply by ply. This results in variable quality and inconsistencies in the compaction. The manual operations using the compaction roller hand tools require skilled technicians. Additionally, such manual operations are time intensive, require inspection and rework and lead to overall increased life cycle time for compaction of the ceramic matrix composite ply on the layup tool.

The abstract of "Automated planning for robotic layup of composite prepreg", Malhan Rishi K. et al., Robotics and Computer Integrated Manufacturing 67 (2021) , pages 1-27, states that "hand layup is a commonly used process for making composite structures from several plies of carbon-fiber prepreg. The process involves multiple human operators manipulating and conforming layers of prepreg to a mold. The manual layup process is ergonomically challenging, tedious, and limits throughput. Moreover, different operators may perform the process differently, and hence introduce inconsistency. We have developed a multi-robot cell to automate the layup process. A human expert provides a sequence to conform to the ply and types of end-effectors to be used as input to the system. The system automatically generates trajectories for the robots that can achieve the specified layup. Using the cell requires the automated generation of different types of plans. This paper addresses two main planning problems: (a) generating plans to grasp and manipulate the ply and (b) generating feasible robot trajectories. We use a hybrid-physics based simulator coupled with a state space search to find grasp plans. The system employs a strategy that applies constraints successively in a nonlinear optimization formulation to identify suitable placements of the robots around the mold so that feasible trajectories can be generated. Our system can generate plans in a computationally efficient manner, and it can handle a wide variety of complex parts. We demonstrate the automated layup by conducting physical experiments on an industry-inspired mold using the generated plans".

The abstract of US 2023/0173748 A1 states: "a manufacturing system includes a plurality of rails, a plurality of head manipulating mechanisms respectively coupled to the rails, and a plurality of automated fiber placement (AFP) heads respectively coupled to the head manipulating mechanisms. The rails are arranged around a barrel-shaped layup tool, and each rail is parallel to a tool axis. Each head manipulating mechanism moves along a rail. The head manipulating mechanisms position the AFP heads in circumferential relation to each other about a tool surface of the layup tool. A total quantity of AFP heads comprises the maximum number of AFP heads that can be circumferentially arranged in longitudinal alignment with each other on the layup tool without interfering with each other while applying layup material over the tool when the layup tool is stationary and during rotation about the tool axis, to thereby fabricate a green state layup having a barrel shape".

The abstract of US 2023/051895 A1 states: "A method of detecting defects in a composite layup includes capturing, using an infrared camera, reference images of a reference layup being laid up by a reference layup head. The method also includes manually reviewing the reference images for defects, and generating reference defect masks indicating defects in the reference images. The method further includes training, using the reference images and reference defect masks, a neural network, creating a machine learning model that, given a production image as input, outputs a production defect mask indicating the defect location and the defect type of each defect. The method also includes capturing, using an infrared camera, production images of a production layup being laid up by the production layup head, and applying the model to the production images to automatically generate a production defect masks indicating each defect in the production images.

The abstract of "Determining feasible robot placements in robotic Cells for composite prepreg sheet layup", Malhan Rishi K. et al., Vol. 1: Additive manufacturing, manufacturing equipment and systems; bio and sustainable manufacturing, p. 1-13 states: "High-performance composites are widely used in industry because of specific mechanical properties and lightweighting opportunities. Current automation solutions to manufacturing components from prepreg (pre-impregnated precursor material) sheets are limited. Our previous work has demonstrated the technical feasibility of a robotic cell to automate the sheet layup process. Many decisions are required for the cell to function correctly, and the time necessary to make these decisions must be reduced to utilize the cell effectively. Robot placement with respect to the mold is a significant and complex decision problem. Ensuring that robots can collaborate effectively requires addressing multiple constraints related to the robot workspace, singularity, and velocities. Solving this problem requires developing computationally efficient algorithms to find feasible robot placements in the cell. We describe an approach based on successive solution refinement strategy to identify a cell design that satisfies all constraints related to robot placement".

Accordingly, those skilled in the art continue with research and development efforts to introduce automated techniques for compaction of certain composite plies on layup tools, particularly ceramic matrix composite plies.

Disclosed are examples of methods for operation of a layup cell during composite manufacturing and layup cells for composite manufacturing. The following is a non-exhaustive list of examples, which may or may not be claimed, of the subject matter according to the present disclosure.

In an example, the disclosed method for operation of a layup cell during composite manufacturing includes: (1) running a compaction application program at a robot control system of the layup cell using a path plan data file defining a path plan for automated manipulation of a compaction roller for compacting a ceramic matrix composite ply on a layup tool; (2) capturing image data of the ceramic matrix composite ply after compaction on the layup tool using a surface imaging device; (3) at least temporarily storing the image data for the ceramic matrix composite ply after compaction in a ply image data file; and (4) processing the ply image data file to identify one or more areas of the ceramic matrix composite ply that require re-compaction. As a next step and/or as one of the method steps the re-compaction is performed.

In an example, the disclosed layup cell for composite manufacturing includes a layup tool, a ceramic matrix composite ply, a robot control system, a robotic arm and at least one end effector. The ceramic matrix composite ply placed on the layup tool. The robot control system includes at least one processor and associated memory, at least one program storage device and at least one data storage device. The at least one program storage device in operative communication with the at least one processor and storing a compaction application program. The at least one data storage device in operative communication with the at least one processor and storing a path plan data file. The robotic arm in operative communication with the robot control system. The at least one end effector is attached to the robotic arm and includes a compaction roller and a surface imaging device. The compaction roller attached to the at least one end effector. The surface imaging device attached to the at least one end effector. The at least one processor is configured to run the compaction application program on the robot control system using the path plan data file for automated manipulation of the robotic arm and the compaction roller for compacting the ceramic matrix composite ply on the layup tool. The robot control system, the at least one processor, the robotic arm, the at least one end effector and the surface imaging device are configured to capture image data of the ceramic matrix composite ply after compaction on the layup tool using the surface imaging device. The at least one processor is configured to at least temporarily store the image data for the ceramic matrix composite ply after compaction in a ply image data file on the at least one data storage device. The at least one processor is configured to process the ply image data file to identify one or more areas of the ceramic matrix composite ply that require re-compaction. In another example, the disclosed method for operation of a layup cell during composite manufacturing includes: (1) running a compaction application program using a path plan data file defining a path plan for automated manipulation of a compaction roller for compacting a ceramic matrix composite ply on a layup tool; (2) capturing image data of the ceramic matrix composite ply after compaction on the layup tool; (3) at least temporarily storing the image data for the ceramic matrix composite ply after compaction in a ply image data file; (4) processing the ply image data file to identify one or more areas of the ceramic matrix composite ply that require re-compaction; (5) running a re-compaction path planning application program based on the one or more areas of the ceramic matrix composite ply that require re-compaction, the path plan data file for the ceramic matrix composite ply and tool design data providing dimensional characteristics of a working surface for the layup tool to generate a re-compaction path plan; (6) at least temporarily storing the re-compaction path plan in a re-compaction path plan data file; (7) running) the compaction application program using the re-compaction path plan data file for automated maneuvering of the compaction roller to re-compact each area of the ceramic matrix composite ply that requires re-compaction on the layup tool; (8) capturing revised image data of the ceramic matrix composite ply after re-compaction of the one or more areas that required re-compaction; (9) at least temporarily storing the revised image data for the ceramic matrix composite ply in a revised ply image data file after the re-compaction; and (10) processing the revised ply image data file to confirm the re-compaction of the one or more areas of the ceramic matrix composite ply was successful. This aspect or example may be combined with another of the described aspects/examples or may be provided as a separate aspect that is independent from the other described aspects/examples. It will be understood that the actual re-compaction that is performed may be considered as one of the method steps and/or as an additional step.

Other examples of the disclosed methods for operation of a layup cell during composite manufacturing and layup cells for composite manufacturing will become apparent from the following detailed description, the accompanying drawings and the appended claims.
Fig. 1 is a flow diagram of an example of a method for operation of a layup cell during composite manufacturing;
Fig. 2 is a flow diagram of an example of the further processing of the ply image data file for the method of Fig. 1;
Fig. 3 is a flow diagram of an example of the processing of the ply image data file for the method of Fig. 1;
Fig. 4, in combination with Fig. 3, is a flow diagram of another example of the processing of the ply image data file for the method of Fig. 1;
Fig. 5, in combination with Fig. 3, is a flow diagram of yet another example of the processing of the ply image data file for the method of Fig. 1;
Fig. 6 is a flow diagram of still another example of the further processing of the ply image data file for the method of Fig. 1;
Fig. 7, in combination with Fig. 6, is a flow diagram of still yet another example of the processing of the ply image data file for the method of Fig. 1;
Fig. 8, in combination with Fig. 6, is a flow diagram of another example of the processing of the ply image data file for the method of Fig. 1;
Fig. 9, in combination with Fig. 1, is a flow diagram of another example of a method for operation of a layup cell during composite manufacturing;
Fig. 10 is a functional block diagram of an example of a layup cell for composite manufacturing; and
Figs. 11A-B is a flow diagram of yet another example of a method for operation of a layup cell during composite manufacturing;
Fig. 12 is a functional diagram of an example of a path plan for a ceramic matrix composite ply in which reinforcement fibers are at a zero-degree orientation;
Fig. 13 is a block diagram of aircraft production and service methodology; and
Fig. 14 is a schematic illustration of an aircraft.

Various examples of methods for operation of a layup cell during composite manufacturing and layup cells for composite manufacturing are disclosed herein. The various examples provide techniques using fully automated compaction of ceramic matrix composite plies on layup tools in layup cells using path plans. Techniques for automated inspection of the plies after the compaction to identify uncompacted regions are also disclosed. The disclosure also includes techniques for automated generation of compaction paths for rework of the uncompacted regions.

Various examples of the methods disclosed herein refer to composite plies. The composite plies are formed by cutting woven fabric to a desired size for the rollout compaction on a layup tool. The woven fabric can be in various weave styles. For example, the fabric may have an orthogonal weave of zero-degree and 90-degree fibers in the warp and weft directions. Where a single fiber orientation is referenced below, it is understood to refer to a primary fiber of an interwoven fabric that also includes at least one secondary fiber. The single fiber orientation described may be based on the warp fibers, the weft fibers or any directional set of interwoven fibers.

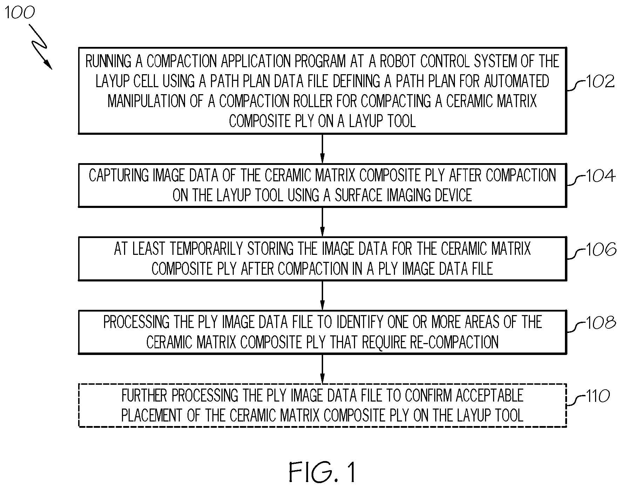

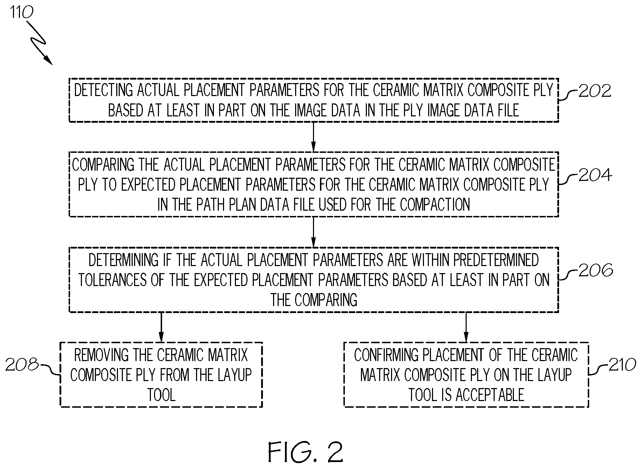

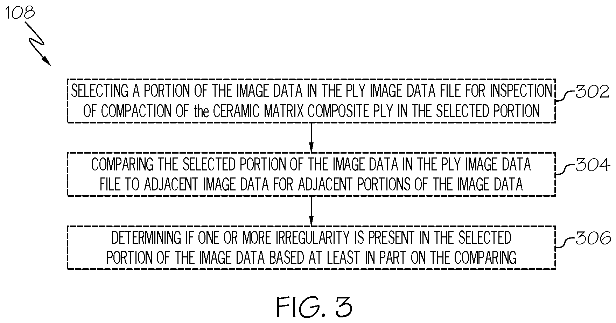

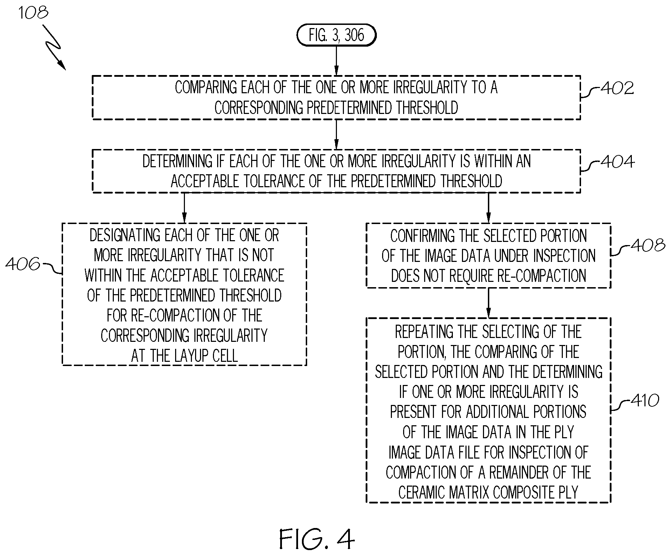

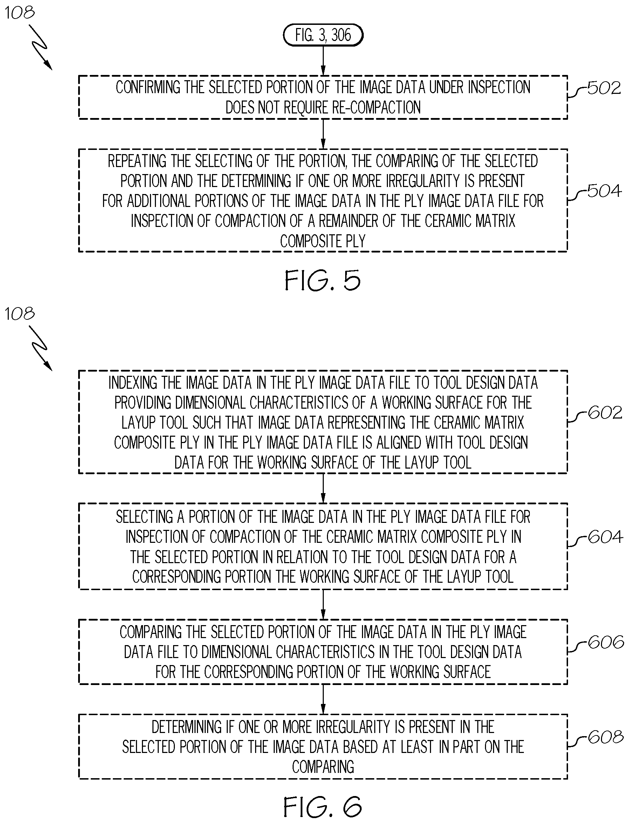

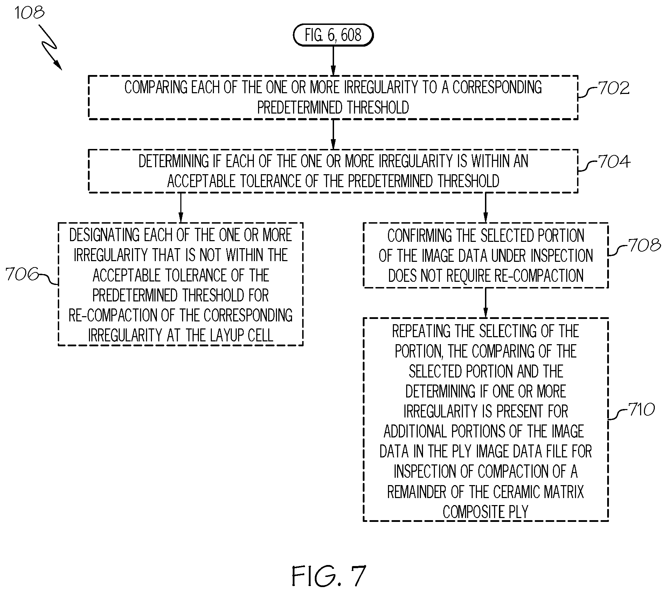

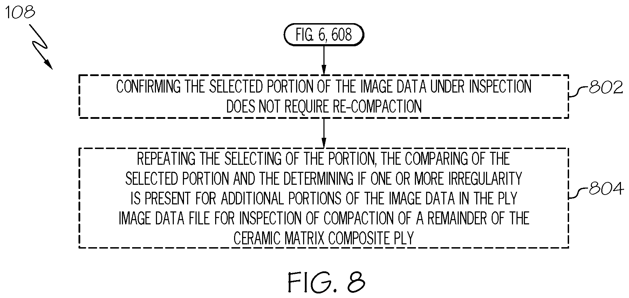

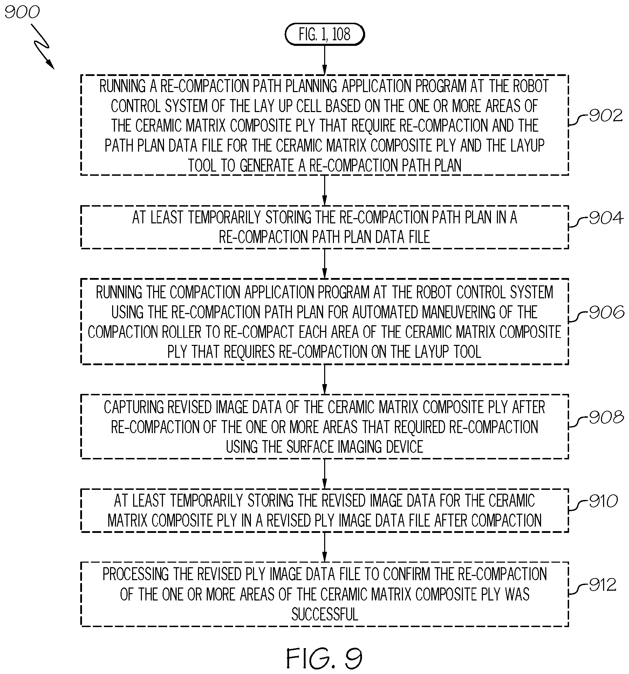

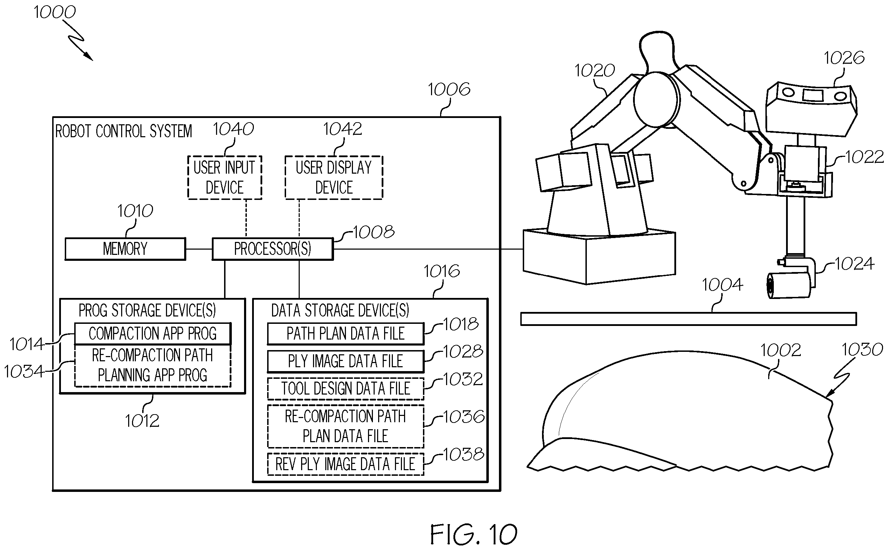

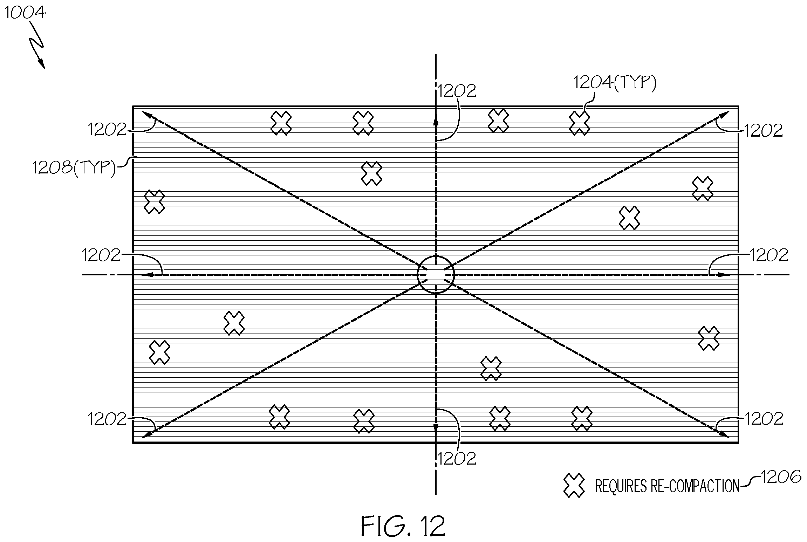

Referring generally to Figs. 1-10 and 12, by way of examples, the present disclosure is directed to a method 100, 900 for operation of a layup cell during composite manufacturing. Figs. 1-8 disclose various example of method 100. Fig. 9, in combination with Fig. 1, discloses several examples of method 900. Fig. 10 discloses an example of a layup cell 1000 for composite manufacturing. Fig. 12 discloses an example of a path plan 1202 for a ceramic matrix composite ply 1004 in which reinforcement fibers 1208 are at a zero-degree orientation.

With reference again to Figs. 1-8, 10 and 12, in one or more examples, a method 100 (see Fig. 1) for operation of a layup cell 1000 during composite manufacturing includes running 102 a compaction application program 1014 at a robot control system 1006 of the layup cell 1000 using a path plan data file 1018 defining a path plan 1202 for automated manipulation of a compaction roller 1024 for compacting a ceramic matrix composite ply 1004 on a layup tool 1002. At 104, image data of the ceramic matrix composite ply 1004 is captured after compaction on the layup tool 1002 using a surface imaging device 1026. At 106, the image data for the ceramic matrix composite ply 1004 after compaction is at least temporarily stored in a ply image data file 1028. At 108, the ply image data file 1028 is processed to identify one or more areas 1204 of the ceramic matrix composite ply 1004 that require re-compaction 1206. Method 100, and also the other related methods that are described here, may comprise the re-compaction as one of the steps and/or a next step.

In another example of the method 100, the composite manufacturing includes ceramic matrix composite manufacturing. In yet another example of the method 100, the path plan data file 1018 is tailored for compaction of the ceramic matrix composite ply 1004 on the layup tool 1002 using the compaction roller 1024. In still another example of the method 100, the automated manipulation includes maneuvering the compaction roller 1024 along the path plan 1202 using a robotic arm 1020.

In still yet another example of the method 100, the compaction roller 1024 includes an approximately 7.6 cm (three inch) roller, a roller having a width ranging between approximately 5.0 cm (two inches) and approximately 10.1 cm (four inches), a roller having a width ranging between approximately 12.7 cm (five inches) and approximately 17.78 cm (seven inches), a roller having a width ranging between approximately 20.3 cm (eight inches) and approximately 25.4 cm (ten inches) and a roller having a width ranging between approximately 27.9 cm (eleven inches) and approximately 33.0 cm (thirteen inches) or any other suitable compaction roller. In another example of the method 100, the compaction roller 1024 includes an automated compaction roller 1024. In yet another example of the method 100, the compaction roller 1024 is attached to an end effector 1022 of a robotic arm 1020. The robotic arm 1020 being in operative communication with the robot control system 1006.

In still another example of the method 100, the ceramic matrix composite ply 1004 includes ceramic reinforcement fibers 1208 and a ceramic matrix. In a further example, the ceramic reinforcement fibers 1208 include carbon reinforcement fibers, silicon carbide reinforcement fibers, alumina reinforcement fibers, alumina silica reinforcement fibers or any other suitable type of ceramic reinforcement fibers 1208 in any suitable combination. In another further example, the ceramic matrix includes carbon material, silicon carbide material, alumina material, alumina silica material or any other suitable type of ceramic matrix material in any suitable combination. In yet another further example, the ceramic matrix is deposited on the ceramic reinforcement fibers 1208 to form the ceramic matrix composite.

In still yet another example of the method 100, the layup tool 1002 includes a working surface 1030 upon which the ceramic matrix composite ply 1004 is placed during the composite manufacturing. In a further example, the working surface 1030 of the layup tool 1002 is three-dimensional. In another further example, the working surface 1030 of the layup tool 1002 includes a curved portion, a double curved portion, a contoured portion, a geometrically-shaped portion, a rising ramp portion, a falling ramp portion, a two-dimensional portion or any other suitable shaped portion in any suitable combination.

In another example of the method 100, the surface imaging device 1026 includes a three-dimensional camera, a color plus depth camera, a color camera, a depth camera, a depth sensor, a time-of-flight sensor, a red-green-blue plus depth camera, a stereo vision camera, a binocular vision camera, a laser profilometer, a light detection and ranging sensor or any other suitable surface imaging device.

In yet another example, the method 100 also includes further processing 110 the ply image data file 1028 to confirm acceptable placement of the ceramic matrix composite ply 1004 on the layup tool 1002.

In a further example, the further processing 110 of the ply image data file 1028 includes detecting 202 actual placement parameters for the ceramic matrix composite ply 1004 based at least in part on the image data in the ply image data file 1028. At 204, the actual placement parameters for the ceramic matrix composite ply 1004 are compared to expected placement parameters for the ceramic matrix composite ply 1004 in the path plan data file 1018 used for the compaction. At 206, the process determines if the actual placement parameters are within predetermined tolerances of the expected placement parameters based at least in part on the comparing.

In an even further example, the actual placement parameters include a first position parameter representative of a first corner of the ceramic matrix composite ply 1004, a second position parameter representative of a second corner of the ceramic matrix composite ply 1004, a third position parameter representative of a third corner of the ceramic matrix composite ply 1004, a fourth position parameter representative of a fourth corner of the ceramic matrix composite ply 1004, an orientation parameter representative of an orientation of ceramic fibers of the ceramic matrix composite ply 1004 or any other suitable actual placement parameter in any suitable combination.

In another even further example, the expected placement parameters include at least one of a first position parameter representative of a first corner of the ceramic matrix composite ply 1004, a second position parameter representative of a second corner of the ceramic matrix composite ply 1004, a third position parameter representative of a third corner of the ceramic matrix composite ply 1004, a fourth position parameter representative of a fourth corner of the ceramic matrix composite ply 1004, an orientation parameter representative of an orientation of ceramic fibers of the ceramic matrix composite ply 1004 or any other suitable expected placement parameter in any suitable combination.

In yet another further example, the predetermined tolerances include a range of approximately 4 millimeters to approximately 10 millimeters from corresponding expected placement parameters. In still another further example, the predetermined tolerances include a range of approximately 2 degrees to approximately 5 degrees from corresponding expected placement parameters in relation to orientation of ceramic fibers within the ceramic matrix composite ply 1004.

In still yet another further example of the method 100, where the actual placement parameters are not within predetermined tolerances of the expected placement parameters, the further processing 110 of the ply image data file 1028 also includes removing 208 the ceramic matrix composite ply 1004 from the layup tool 1002. In another further example of the method 100, where the actual placement parameters are within predetermined tolerances of the expected placement parameters, the further processing 110 of the ply image data file 1028 also includes confirming 210 placement of the ceramic matrix composite ply 1004 on the layup tool 1002 is acceptable.

In another example of the method 100, the processing 108 of the ply image data file 1028 includes selecting 302 a portion of the image data in the ply image data file 1028 for inspection of compaction of the ceramic matrix composite ply 1004 in the selected portion. At 304, the selected portion of the image data in the ply image data file 1028 is compared to adjacent image data for adjacent portions of the image data. At 306, the process determines if one or more irregularity is present in the selected portion of the image data based at least in part on the comparing.

In a further example, the one or more irregularity includes a bubble in the ceramic matrix composite ply 1004, a blister in the ceramic matrix composite ply 1004, a crease in the ceramic matrix composite ply 1004, a wrinkle in the ceramic matrix composite ply 1004, a bridge in the ceramic matrix composite ply 1004, a void in the ceramic matrix composite ply 1004, an untacked edge in the ceramic matrix composite ply 1004, a free edge in the ceramic matrix composite ply 1004, a pleat in the ceramic matrix composite ply 1004 and presence of a foreign object or another other suitable type of irregularity in any suitable combination.

Identified irregularities may require re-compaction to allow a possible correction. Such irregularities may, in addition to the irregularities mentioned in the foregoing paragraph, in particular relate to air pockets or bubbles. Also, irregularities may relate to foreign object debris, areas of low compaction and the like.

In another further example, where one or more irregularity is present, the processing 108 of the ply image data file 1028 also includes comparing 402 each of the one or more irregularity to a corresponding predetermined threshold. At 404, the process determines if each of the one or more irregularity is within an acceptable tolerance of the predetermined threshold. In an even further example, where any of the one or more irregularity is not within the acceptable tolerance of the predetermined threshold, the processing 108 of the ply image data file 1028 also includes designating 406 each of the one or more irregularity that is not within the acceptable tolerance of the predetermined threshold for re-compaction 1206 of the corresponding irregularity at the layup cell 1000. In another even further example, where the one or more irregularity are within the acceptable tolerance of the predetermined threshold, the processing 108 of the ply image data file 1028 also includes confirming 408 the selected portion of the image data under inspection does not require re-compaction. At 410, the process repeats the selecting 302 of the portion, the comparing 304 of the selected portion and the determining 306 if one or more irregularity is present for additional portions of the image data in the ply image data file 1028 for inspection of compaction of a remainder of the ceramic matrix composite ply 1004.

In yet another example of the method 100, where no irregularity is present in the selected portion of the image data, the processing 108 of the ply image data file 1028 also includes confirming 502 the selected portion of the image data under inspection does not require re-compaction. At 504, the process repeats the selecting 302 of the portion, the comparing 304 of the selected portion and the determining 306 if one or more irregularity is present for additional portions of the image data in the ply image data file 1028 for inspection of compaction of a remainder of the ceramic matrix composite ply 1004.

In another example of the method 100, the processing 108 of the ply image data file 1028 includes indexing 602 the image data in the ply image data file 1028 to tool design data providing dimensional characteristics of a working surface 1030 for the layup tool 1002 such that image data representing the ceramic matrix composite ply 1004 in the ply image data file 1028 is aligned with tool design data for the working surface 1030 of the layup tool 1002. The tool design data being stored in a tool design data file 1032. At 604, a portion of the image data in the ply image data file 1028 is selected for inspection of compaction of the ceramic matrix composite ply 1004 in the selected portion in relation to the tool design data for a corresponding portion the working surface 1030 of the layup tool 1002. At 606, the selected portion of the image data in the ply image data file 1028 is compared to dimensional characteristics in the tool design data file 1032 for the corresponding portion of the working surface 1030. At 608, the process determines if one or more irregularity is present in the selected portion of the image data based at least in part on the comparing.

In a further example, the one or more irregularity includes a bubble in the ceramic matrix composite ply 1004, a blister in the ceramic matrix composite ply 1004, a crease in the ceramic matrix composite ply 1004, a wrinkle in the ceramic matrix composite ply 1004, a bridge in the ceramic matrix composite ply 1004, a void in the ceramic matrix composite ply 1004, an untacked edge in the ceramic matrix composite ply 1004, a free edge in the ceramic matrix composite ply 1004, a pleat in the ceramic matrix composite ply 1004, presence of a foreign object or any other suitable type of irregularity in any suitable combination.

In another further example of the method 100, where one or more irregularity is present, the processing 108 of the ply image data file 1028 also includes comparing 702 each of the one or more irregularity to a corresponding predetermined threshold. At 704, the process determines if each of the one or more irregularity is within an acceptable tolerance of the predetermined threshold. In an even further example, where any of the one or more irregularity is not within the acceptable tolerance of the predetermined threshold, the processing 108 of the ply image data file 1028 also includes designating 706 each of the one or more irregularity that is not within the acceptable tolerance of the predetermined threshold for re-compaction 1206 of the corresponding irregularity at the layup cell 1000. In another even further example, where the one or more irregularity are within the acceptable tolerance of the predetermined threshold, the processing 108 of the ply image data file 1028 also includes confirming 708 the selected portion of the image data under inspection does not require re-compaction. At 710, the process repeats the selecting 604 of the portion, the comparing 606 of the selected portion and the determining 608 if one or more irregularity is present for additional portions of the image data in the ply image data file 1028 for inspection of compaction of a remainder of the ceramic matrix composite ply 1004.

In yet another further example of the method 100, where no irregularity is present in the selected portion of the image data, the processing 108 of the ply image data file 1028 also includes confirming 802 the selected portion of the image data under inspection does not require re-compaction. At 804, the process repeats the selecting 604 of the portion, the comparing 606 of the selected portion and the determining 608 if one or more irregularity is present for additional portions of the image data in the ply image data file 1028 for inspection of compaction of a remainder of the ceramic matrix composite ply 1004.

With reference again to Figs. 1, 9, 11 and 12, in one or more examples, a method 900 (see Fig. 9) for operation of a layup cell 1000 during composite manufacturing includes running 902 a re-compaction path planning application program 1034 at the robot control system 1006 of the layup cell 1000 based on the one or more areas 1204 of the ceramic matrix composite ply 1004 that require re-compaction 1206. The path plan data file 1018 for the ceramic matrix composite ply 1004 and tool design data providing dimensional characteristics of a working surface 1030 for the layup tool 1002 to generate a re-compaction path plan. The tool design data being stored in a tool design data file 1032. At 904, the re-compaction path plan is at least temporarily stored in a re-compaction path plan data file 1036. At 906, the compaction application program 1014 is run at the robot control system 1006 using the re-compaction path plan for automated maneuvering of the compaction roller 1024 to re-compact each area of the ceramic matrix composite ply 1004 that requires re-compaction 1206 on the layup tool 1002.

In another example, the method 900 also includes capturing 908 revised image data of the ceramic matrix composite ply 1004 after re-compaction 1206 of the one or more areas 1204 that required re-compaction 1206 using the surface imaging device 1026. At 910, the revised image data for the ceramic matrix composite ply 1004 is at least temporarily stored in a revised ply image data file 1038 after the re-compaction 1206. At 912, the revised ply image data file 1038 is processed to confirm the re-compaction 1206 of the one or more areas 1204 of the ceramic matrix composite ply 1004 was successful. For example, if the re-compaction is not successful, the process may be repeated until it is successful or until it is determined that manual intervention is required.

Referring generally to Figs. 10 and 12, by way of examples, the present disclosure is directed to a layup cell 1000 for composite manufacturing. Fig. 10 discloses an example of the layup cell 1000 for composite manufacturing. Fig. 12 discloses an example of a path plan 1202 for a ceramic matrix composite ply 1004 in which reinforcement fibers 1208 are at a zero-degree orientation.

With reference again to Figs. 10 and 12, in one or more examples, a layup cell 1000 includes a layup tool 1002, a ceramic matrix composite ply 1004, a robot control system 1006, a robotic arm 1020 and at least one end effector 1022. The ceramic matrix composite ply 1004 placed on the layup tool 1002. The robot control system 1006 includes at least one processor 1008 and associated memory 1010, at least one program storage device 1012 and at least one data storage device 1016. The at least one program storage device 1012 in operative communication with the at least one processor 1008 and storing a compaction application program 1014. The at least one data storage device 1016 is in operative communication with the at least one processor 1008 and storing a path plan data file 1018. The a robotic arm 1020 is in operative communication with the robot control system 1006. The at least one end effector 1022 attached to the robotic arm 1020 and including a compaction roller 1024 and a surface imaging device 1026. The compaction roller 1024 attached to the at least one end effector 1022. The surface imaging device 1026 attached to the at least one end effector 1022. The at least one processor 1008 is configured to run the compaction application program 1014 on the robot control system 1006 using the path plan data file 1018 for automated manipulation of the robotic arm 1020 and the compaction roller 1024 for compacting the ceramic matrix composite ply 1004 on the layup tool 1002. The robot control system 1006, the at least one processor 1008, the robotic arm 1020, the at least one end effector 1022 and the surface imaging device 1026 are configured to capture image data of the ceramic matrix composite ply 1004 after compaction on the layup tool 1002. The at least one processor 1008 is configured to at least temporarily store the image data for the ceramic matrix composite ply 1004 after compaction in a ply image data file 1028 on the at least one data storage device 1016. The at least one processor 1008 is configured to process the ply image data file 1028 to identify one or more areas 1204 of the ceramic matrix composite ply 1004 that require re-compaction 1206.

In various other examples of the layup cell 1000, the surface imaging device 1026 may be mounted at a fixed location rather than being attached to the end effector 1022. In these examples, the robot control system 1006, the at least one processor 108 and the surface imaging device 1026 are configured to capture the image data of the ceramic matrix composite ply 1004 after the compaction. The robotic arm 1020 and the at least one end effector 1022 are not involved in capturing the image data where the surface imaging device 1026 is mounted at a fixed location.

In another example of the layup cell 1000, the composite manufacturing includes ceramic matrix composite manufacturing.

In yet another example of the layup cell 1000, the compaction roller 1024 includes an approximately 7.6 cm (three inch) roller, a roller having a width ranging between approximately 5.0 cm (two inches) and approximately 10.1 cm (four inches), a roller having a width ranging between approximately 12.7 cm (five inches) and approximately 17.78 cm (seven inches), a roller having a width ranging between approximately 20.3 cm (eight inches) and approximately 25.4 cm (ten inches) and a roller having a width ranging between approximately 27.9 cm (eleven inches) and approximately 33.0 cm (thirteen inches) or any other suitable compaction roller.

In still another example of the layup cell 1000, the ceramic matrix composite ply 1004 includes ceramic reinforcement fibers 1208 and a ceramic matrix.

In still yet another example of the layup cell 1000, the layup tool 1002 includes a working surface 1030 upon which the ceramic matrix composite ply 1004 is placed during the composite manufacturing. In a further example, the working surface 1030 of the layup tool 1002 is three-dimensional. In another further example, the working surface 1030 of the layup tool 1002 includes a curved portion, a double curved portion, a contoured portion, a geometrically-shaped portion, a rising ramp portion, a falling ramp portion, a two-dimensional portion or any other suitable shaped portion in any suitable combination.

In another example of the layup cell 1000, the surface imaging device 1026 includes a three-dimensional camera, a color plus depth camera, a color camera, a depth camera, a depth sensor, a time-of-flight sensor, a red-green-blue plus depth camera, a stereo vision camera, a binocular vision camera, a laser profilometer, a light detection and ranging sensor or any other suitable surface imaging device.

In yet another example of the layup cell 1000, the at least one processor 1008 is configured to further process the ply image data file 1028 to confirm acceptable placement of the ceramic matrix composite ply 1004 on the layup tool 1002. In a further example, the at least one processor 1008 is configured to: i) detect actual placement parameters for the ceramic matrix composite ply 1004 based at least in part on the image data in the ply image data file 1028, ii) compare the actual placement parameters for the ceramic matrix composite ply 1004 to expected placement parameters for the ceramic matrix composite ply 1004 in the path plan data file 1018 used for the compaction and iii) determine if the actual placement parameters are within predetermined tolerances of the expected placement parameters based at least in part on the comparing. In an even further example, where the actual placement parameters are not within predetermined tolerances of the expected placement parameters, the layup cell 1000 is configured to permit removal of the ceramic matrix composite ply 1004 from the layup tool 1002. In another even further example, where the actual placement parameters are within predetermined tolerances of the expected placement parameters, the robot control system 1006 is configured to confirm placement of the ceramic matrix composite ply 1004 on the layup tool 1002 is acceptable.

In still another example of the layup cell 1000, the at least one processor 1008 is configured to: i) select a portion of the image data in the ply image data file 1028 for inspection of compaction of the ceramic matrix composite ply 1004 in the selected portion, ii) compare the selected portion of the image data in the ply image data file 1028 to adjacent image data for adjacent portions of the image data and iii) determine if one or more irregularity is present in the selected portion of the image data based at least in part on the comparing.

In a further example, where one or more irregularity is present, the at least one processor 1008 is configured to: i) compare each of the one or more irregularity to a corresponding predetermined threshold and ii) determine if each of the one or more irregularity is within an acceptable tolerance of the predetermined threshold. In an even further example, where any of the one or more irregularity is not within the acceptable tolerance of the predetermined threshold, the at least one processor 1008 is configured to designate each of the one or more irregularity that is not within the acceptable tolerance of the predetermined threshold for re-compaction 1206 of the corresponding irregularity at the layup cell 1000. In another even further example, where the one or more irregularity are within the acceptable tolerance of the predetermined threshold, the at least one processor 1008 is configured to: i) confirm the selected portion of the image data under inspection does not require re-compaction and ii) repeat selecting of the portion, comparing of the selected portion and determining if one or more irregularity is present for additional portions of the image data in the ply image data file 1028) for inspection of compaction of a remainder of the ceramic matrix composite ply 1004).

In another further example, where no irregularity is present in the selected portion of the image data, the at robot control system 1006 is configured to: i) confirm the selected portion of the image data under inspection does not require re-compaction and ii) repeat selecting of the portion, comparing of the selected portion and determining if one or more irregularity is present for additional portions of the image data in the ply image data file 1028 for inspection of compaction of a remainder of the ceramic matrix composite ply 1004.

In still yet another example of the layup cell 1000, the at least one processor 1008 and the at least one data storage device 1016 are configured to: i) index the image data in the ply image data file 1028 to tool design data providing dimensional characteristics of a working surface 1030 for the layup tool 1002 such that image data representing the ceramic matrix composite ply 1004 in the ply image data file 1028 is aligned with tool design data for the working surface 1030 of the layup tool 1002, the tool design data being stored by the at least one data storage device 1016 in a tool design data file 1032, ii) select a portion of the image data in the ply image data file 1028 for inspection of compaction of the ceramic matrix composite ply 1004 in the selected portion in relation to the tool design data for a corresponding portion the working surface 1030 of the layup tool 1002, iii) compare the selected portion of the image data in the ply image data file 1028 to dimensional characteristics in the tool design data file 1032 for the corresponding portion of the working surface 1030 and iv) determine if one or more irregularity is present in the selected portion of the image data based at least in part on the comparing.

In a further example, where one or more irregularity is present, the at least one processor 1008 is configured to: i) compare each of the one or more irregularity to a corresponding predetermined threshold and ii) determine if each of the one or more irregularity is within an acceptable tolerance of the predetermined threshold. In an even further example, where any of the one or more irregularity is not within the acceptable tolerance of the predetermined threshold, the at least one processor 1008 is configured to designate each of the one or more irregularity that is not within the acceptable tolerance of the predetermined threshold for re-compaction 1206 of the corresponding irregularity at the layup cell 1000. In another even further example, where irregularities of the one or more irregularity are within the acceptable tolerance of the predetermined threshold, the robot control system 1006 is configured to: i) confirm the selected portion of the image data under inspection does not require re-compaction and ii) repeat selecting of the portion, comparing of the selected portion and determining if one or more irregularity is present for additional portions of the image data in the ply image data file 1028 for inspection of compaction of a remainder of the ceramic matrix composite ply 1004.

In another further example, where no irregularity is present in the selected portion of the image data, the robot control system 1006 is configured to: i) confirm the selected portion of the image data under inspection does not require re-compaction and ii) repeat selecting of the portion, comparing of the selected portion and determining if one or more irregularity is present for additional portions of the image data in the ply image data file 1028 for inspection of compaction of a remainder of the ceramic matrix composite ply 1004.

In another example of the layup cell 1000, the at least one processor 1008, the at least one program storage device 1012 and the at least one data storage device 1016 are configured to: i) run a re-compaction path planning application program 1034 based on the one or more areas 1204 of the ceramic matrix composite ply 1004 that require re-compaction 1206, the path plan data file 1018 for the ceramic matrix composite ply 1004 and tool design data providing dimensional characteristics of a working surface 1030 for the layup tool 1002 to generate a re-compaction path plan, the tool design data being stored by the at least one data storage device 1016 in a tool design data file 1032, ii) at least temporarily store the re-compaction path plan in a re-compaction path plan data file 1036 and iii) run the compaction application program 1014 on the robot control system 1006 using the re-compaction path plan data file 1036 for automated maneuvering of the compaction roller 1024 to re-compact each area of the ceramic matrix composite ply 1004 that requires re-compaction 1206 on the layup tool 1002.

In a further example, the robot control system 1006 and the robotic arm 1020 are configured to: i) capture revised image data of the ceramic matrix composite ply 1004 using the surface imaging device 1026 after re-compaction 1206 of the one or more areas 1204 that required re-compaction 1206, ii) at least temporarily store the revised image data for the ceramic matrix composite ply 1004 after the re-compaction 1206 in a revised ply image data file 1038 and iii) process the revised ply image data file 1038 to confirm the re-compaction 1206 of the one or more areas 1204 of the ceramic matrix composite ply 1004 was successful. For example, if the re-compaction is not successful, the process may be repeated until it is successful or until it is determined that manual intervention is required.

In various other examples of the layup cell 1000, the surface imaging device 1026 may be mounted at a fixed location rather than being attached to the end effector 1022. In these examples, the robot control system 1006, the at least one processor 108 and the surface imaging device 1026 are configured to capture the revised image data of the ceramic matrix composite ply 1004 after the re-compaction. The robotic arm 1020 is not involved in capturing the revised image data where the surface imaging device 1026 is mounted at a fixed location.

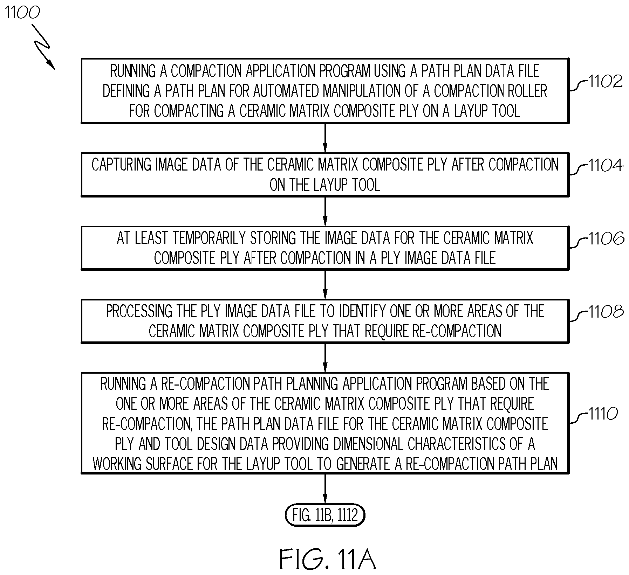

Referring generally to Figs. 10, 11A-B and 12, by way of examples, the present disclosure is directed to a method 1100 for operation of a layup cell during composite manufacturing. Figs. 11A-B disclose various example of method 1100. Fig. 10 discloses an example of a layup cell 1000 for composite manufacturing. Fig. 12 discloses an example of a path plan 1202 for a ceramic matrix composite ply 1004 in which reinforcement fibers 1208 are at a zero-degree orientation.

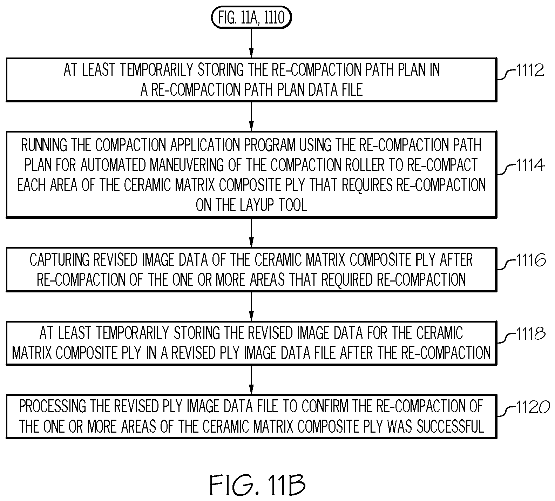

With reference again to Figs. 10, 11A-B and 12, in one or more examples, a method 1100 (see Fig. 11) for operation of a layup cell 1000 during composite manufacturing includes running 1102 a compaction application program 1014 using a path plan data file 1018 defining a path plan 1202 for automated manipulation of a compaction roller 1024 for compacting a ceramic matrix composite ply 1004 on a layup tool 1002. At 1104, image data of the ceramic matrix composite ply 1004 is captured after compaction on the layup tool 1002. At 1106, the image data for the ceramic matrix composite ply 1004 after compaction is at least temporarily stored in a ply image data file 1028. At 1108, the ply image data file 1028 is processed to identify one or more areas 1204 of the ceramic matrix composite ply 1004 that require re-compaction 1206. At 1110, a re-compaction path planning application program 1034 is run based on the one or more areas 1204 of the ceramic matrix composite ply 1004 that require re-compaction 1206, the path plan data file 1018 for the ceramic matrix composite ply 1004 and tool design data providing dimensional characteristics of a working surface 1030 for the layup tool 1002 to generate a re-compaction path plan. At 1112, the re-compaction path plan is at least temporarily stored in a re-compaction path plan data file 1036. At 1114, the compaction application program 1014 is run using the re-compaction path plan data file 1036 for automated maneuvering of the compaction roller 1024 to re-compact each area of the ceramic matrix composite ply 1004 that requires re-compaction 1206 on the layup tool 1002. At 1114, revised image data of the ceramic matrix composite ply 1004 is captured after re-compaction 1206 of the one or more areas 1204 that required re-compaction 1206. At 1116, the revised image data for the ceramic matrix composite ply 1004 is at least temporarily stored in a revised ply image data file 1038 after the re-compaction 1206. At 1120, the revised ply image data file 1038 is processed to confirm the re-compaction 1206 of the one or more areas 1204 of the ceramic matrix composite ply 1004 was successful. For example, if the re-compaction is not successful, the process may be repeated until it is successful or until it is determined that manual intervention is required.

In another example, the method 1100 also includes further processing the ply image data file 1028 to confirm acceptable placement of the ceramic matrix composite ply 1004 on the layup tool 1002. The further processing includes: i) detecting actual placement parameters for the ceramic matrix composite ply 1004 based at least in part on the image data in the ply image data file 1028, ii) comparing the actual placement parameters for the ceramic matrix composite ply 1004 to expected placement parameters for the ceramic matrix composite ply 1004 in the path plan data file 1018 used for the compaction and iii) determining if the actual placement parameters are within predetermined tolerances of the expected placement parameters based at least in part on the comparing.

In yet another example of the method 1100, the processing 1108 of the ply image data file 1028 includes: i) selecting a portion of the image data in the ply image data file 1028 for inspection of compaction of the ceramic matrix composite ply 1004 in the selected portion, ii) comparing the selected portion of the image data in the ply image data file 1028 to adjacent image data for adjacent portions of the image data and determining if one or more irregularity is present in the selected portion of the image data based at least in part on the comparing.

In still another example of the method 1100, the processing 1108 of the ply image data file 1028 includes: i) indexing the image data in the ply image data file 1028 to the tool design data in the tool design data file 1032 providing dimensional characteristics of the working surface 1030 for the layup tool 1002 such that image data representing the ceramic matrix composite ply 1004 in the ply image data file 1028 is aligned with tool design data for the working surface 1030 of the layup tool 1002, ii) selecting a portion of the image data in the ply image data file 1028 for inspection of compaction of the ceramic matrix composite ply 1004 in the selected portion in relation to the tool design data for a corresponding portion the working surface 1030 of the layup tool 1002, comparing the selected portion of the image data in the ply image data file 1028 to dimensional characteristics in the tool design data file 1032 for the corresponding portion of the working surface 1030 and iv) determining if one or more irregularity is present in the selected portion of the image data based at least in part on the comparing.

With reference again to Fig. 10, the robot control system 1006 may also include a user input device 1040 and/or a user display device 1042.

Examples of methods 100, 900, 1100 for operation of a layup cell 1000 and layup cells 1000 for composite manufacturing may be related to or used in the context of aircraft design and manufacture. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to methods for analysis of fastened structures in the design and manufacture of various types of vehicles and in the design and construction of various types of transportation structures.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, control system, device, computing device, processor, structure, article, element, component, or hardware "configured to" perform a specified function is indeed capable of performing the specified function without any alteration, rather than merely having potential to perform the specified function after further modification. In other words, the system, apparatus, device, control system, computing device, processor, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, control system, device, computing device, processor, structure, article, element, component, or hardware that enable the system, apparatus, control system, device, computing device, processor, structure, article, element, component, or hardware to perform the specified function without further modification. For purposes of this disclosure, a system, apparatus, device, control system, device, computing device, processor, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of' may be, for example, without limitation, two of item A, one of item B, and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1-9 and 11A-B, referred to above, the blocks may represent operations, steps, and/or portions thereof, and lines connecting the various blocks do not imply any particular order or dependency of the operations or portions thereof. It will be understood that not all dependencies among the various disclosed operations are necessarily represented. Figs. 1-9 and 11A-B and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Figs. 10, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 10, referred to above, need be included in every example and not all elements, features, and/or components described herein are necessarily depicted in each illustrative example. Accordingly, some of the elements, features, and/or components described and illustrated in Figs. 10 may be combined in various ways without the need to include other features described and illustrated in Figs. 10, other drawing figures, and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 10, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 10, and such elements, features, and/or components may not be discussed in detail herein with reference to each of Figs. 10. Similarly, all elements, features, and/or components may not be labeled in each of Figs. 10, but reference numerals associated therewith may be utilized herein for consistency.

A method (100) for operation of a layup cell (1000) during composite manufacturing (see figures) according to an embodiment of the present application, comprises running (102) a compaction application program (1014) at a robot control system (1006) of the layup cell (1000) using a path plan data file (1018) defining a path plan (1202) for automated manipulation of a compaction roller (1024) for compacting a ceramic matrix composite ply (1004) on a layup tool (1002), capturing (104) image data of the ceramic matrix composite ply (1004) after compaction on the layup tool (1002) using a surface imaging device (1026), at least temporarily storing (106) the image data for the ceramic matrix composite ply (1004) after compaction in a ply image data file (1028), and processing (108) the ply image data file (1028) to identify one or more areas (1204) of the ceramic matrix composite ply (1004) that require re-compaction (1206). As indicated earlier, as a next step and/or as a next step, the re-compaction is performed. Preferably, the composite manufacturing comprises ceramic matrix composite manufacturing. Also, the path plan data file (1018) may be tailored for compaction of the ceramic matrix composite ply (1004) on the layup tool (1002) using the compaction roller (1024) and/or the automated manipulation may comprise maneuvering the compaction roller (1024) along the path plan (1202) using a robotic arm (1020).

In an illustrated embodiment, the compaction roller (1024) comprises at least one of an approximately 7.6 cm (three inch) roller, a roller having a width ranging between approximately 5.0 cm (two inches) and approximately 10.1 cm (four inches), a roller having a width ranging between approximately 12.7 cm (five inches) and approximately 17.78 cm (seven inches), a roller having a width ranging between approximately 20.3 cm (eight inches) and approximately 25.4 cm (ten inches) and a roller having a width ranging between approximately 27.9 cm (eleven inches) and approximately 33.0 cm (thirteen inches). Preferably, the compaction roller (1024) comprises an automated compaction roller (1024) and/or the compaction roller (1024) is attached to an end effector (1022) of a robotic arm (1020), the robotic arm (1020) being in operative communication with the robot control system (1006).

Furthermore, the ceramic matrix composite ply (1004) may comprise ceramic reinforcement fibers (1208) and a ceramic matrix, wherein the ceramic reinforcement fibers (1208) comprise at least one of carbon reinforcement fibers, silicon carbide reinforcement fibers, alumina reinforcement fibers and alumina silica reinforcement fibers and/or wherein the ceramic matrix comprises at least one of carbon material, silicon carbide material, alumina material and alumina silica material. The ceramic matrix is preferably deposited on the ceramic reinforcement fibers (1208) to form the ceramic matrix composite.

The layup tool (1002) optionally comprises a working surface (1030) upon which the ceramic matrix composite ply (1004) is placed during the composite manufacturing. Such working surface (1030) of the layup tool (1002) is preferably three-dimensional and/or comprises at least one of a curved portion, a double curved portion, a contoured portion, a geometrically-shaped portion, a rising ramp portion, a falling ramp portion and a two-dimensional portion.

The surface imaging device (1026) optionally comprises at least one of a three-dimensional camera, a color plus depth camera, a color camera, a depth camera, a depth sensor, a time-of-flight sensor, a red-green-blue plus depth camera, a stereo vision camera, a binocular vision camera, a laser profilometer and a light detection and ranging sensor.

As a further step the method may comprise further processing (110) the ply image data file (1028) to confirm acceptable placement of the ceramic matrix composite ply (1004) on the layup tool (1002). Such further processing preferably comprises detecting (202) actual placement parameters for the ceramic matrix composite ply (1004) based at least in part on the image data in the ply image data file (1028), comparing (204) the actual placement parameters for the ceramic matrix composite ply (1004) to expected placement parameters for the ceramic matrix composite ply (1004) in the path plan data file (1018) used for the compaction, and determining (206) if the actual placement parameters are within predetermined tolerances of the expected placement parameters based at least in part on the comparing. Preferably, the actual placement parameters comprise at least one of a first position parameter representative of a first corner of the ceramic matrix composite ply (1004), a second position parameter representative of a second corner of the ceramic matrix composite ply (1004), a third position parameter representative of a third corner of the ceramic matrix composite ply (1004), a fourth position parameter representative of a fourth corner of the ceramic matrix composite ply (1004) and an orientation parameter representative of an orientation of ceramic fibers of the ceramic matrix composite ply (1004) and/or wherein the expected placement parameters comprise at least one of a first position parameter representative of a first corner of the ceramic matrix composite ply (1004), a second position parameter representative of a second corner of the ceramic matrix composite ply (1004), a third position parameter representative of a third corner of the ceramic matrix composite ply (1004), a fourth position parameter representative of a fourth corner of the ceramic matrix composite ply (1004) and an orientation parameter representative of an orientation of ceramic fibers of the ceramic matrix composite ply (1004) and/or wherein the predetermined tolerances comprise a range of approximately 4 millimeters to approximately 10 millimeters from corresponding expected placement parameters and/or wherein the predetermined tolerances comprise a range of approximately 2 degrees to approximately 5 degrees from corresponding expected placement parameters in relation to orientation of ceramic fibers within the ceramic matrix composite ply (1004).

Where in such method the actual placement parameters are not within predetermined tolerances of the expected placement parameters, the further processing (110) of the ply image data file (1028) further preferably comprises removing (208) the ceramic matrix composite ply (1004) from the layup tool (1002).

Where in such method the actual placement parameters are within predetermined tolerances of the expected placement parameters, the further processing (110) of the ply image data file (1028) further preferably comprises confirming (210) placement of the ceramic matrix composite ply (1004) on the layup tool (1002) is acceptable.

In such method the processing (108) of the ply image data file (1028) further preferably comprises selecting (302) a portion of the image data in the ply image data file (1028) for inspection of compaction of the ceramic matrix composite ply (1004) in the selected portion, comparing (304) the selected portion of the image data in the ply image data file (1028) to adjacent image data for adjacent portions of the image data, and determining (306) if one or more irregularity is present in the selected portion of the image data based at least in part on the comparing.

Where in such method one or more irregularity is present, the processing (108) of the ply image data file (1028) further preferably comprises comparing (402) each of the one or more irregularity to a corresponding predetermined threshold, and determining (404) if each of the one or more irregularity is within an acceptable tolerance of the predetermined threshold. Where any of the one or more irregularity is not within the acceptable tolerance of the predetermined threshold, the processing (108) of the ply image data file (1028) further preferably comprises designating (406) each of the one or more irregularity that is not within the acceptable tolerance of the predetermined threshold for re-compaction (1206) of the corresponding irregularity at the layup cell (1000). Where the one or more irregularity are within the acceptable tolerance of the predetermined threshold, the processing (108) of the ply image data file (1028) further preferably comprises confirming (408) the selected portion of the image data under inspection does not require re-compaction, and repeating (410) the selecting (302) of the portion, the comparing (304) of the selected portion and the determining (306) if one or more irregularity is present for additional portions of the image data in the ply image data file (1028) for inspection of compaction of a remainder of the ceramic matrix composite ply (1004).

Where in such method no irregularity is present in the selected portion of the image data, the processing (108) of the ply image data file (1028) further preferably comprises confirming (502) the selected portion of the image data under inspection does not require re-compaction, and repeating (504) the selecting (302) of the portion, the comparing (304) of the selected portion and the determining (306) if one or more irregularity is present for additional portions of the image data in the ply image data file (1028) for inspection of compaction of a remainder of the ceramic matrix composite ply (1004).

In such method processing (108) of the ply image data file (1028) may further comprises indexing (602) the image data in the ply image data file (1028) to tool design data providing dimensional characteristics of a working surface (1030) for the layup tool (1002) such that image data representing the ceramic matrix composite ply (1004) in the ply image data file (1028) is aligned with tool design data for the working surface (1030) of the layup tool (1002), the tool design data being stored in a tool design data file (1032), selecting (604) a portion of the image data in the ply image data file (1028) for inspection of compaction of the ceramic matrix composite ply (1004) in the selected portion in relation to the tool design data for a corresponding portion the working surface (1030) of the layup tool (1002), comparing (606) the selected portion of the image data in the ply image data file (1028) to dimensional characteristics in the tool design data file (1032) for the corresponding portion of the working surface (1030), and determining (608) if one or more irregularity is present in the selected portion of the image data based at least in part on the comparing. In such method, where one or more irregularity is present, the processing (108) of the ply image data file (1028) may further comprise comparing (702) each of the one or more irregularity to a corresponding predetermined threshold, and determining (704) if each of the one or more irregularity is within an acceptable tolerance of the predetermined threshold. Where in such method any of the one or more irregularity is not within the acceptable tolerance of the predetermined threshold, the processing (108) of the ply image data file (1028) further preferably comprises designating (706) each of the one or more irregularity that is not within the acceptable tolerance of the predetermined threshold for re-compaction (1206) of the corresponding irregularity at the layup cell (1000). Where in such method the one or more irregularity are within the acceptable tolerance of the predetermined threshold, the processing (108) of the ply image data file (1028) further preferably comprises confirming (708) the selected portion of the image data under inspection does not require re-compaction, and repeating (710) the selecting (604) of the portion, the comparing (606) of the selected portion and the determining (608) if one or more irregularity is present for additional portions of the image data in the ply image data file (1028) for inspection of compaction of a remainder of the ceramic matrix composite ply (1004).

Where in such no irregularity is present in the selected portion of the image data, the processing (108) of the ply image data file (1028) further preferably comprises confirming (802) the selected portion of the image data under inspection does not require re-compaction, and repeating (804) the selecting (604) of the portion, the comparing (606) of the selected portion and the determining (608) if one or more irregularity is present for additional portions of the image data in the ply image data file (1028) for inspection of compaction of a remainder of the ceramic matrix composite ply (1004).

The one or more irregularity may comprise at least one of a bubble in the ceramic matrix composite ply (1004), a blister in the ceramic matrix composite ply (1004), a crease in the ceramic matrix composite ply (1004), a wrinkle in the ceramic matrix composite ply (1004), a bridge in the ceramic matrix composite ply (1004), a void in the ceramic matrix composite ply (1004), an untacked edge in the ceramic matrix composite ply (1004), a free edge in the ceramic matrix composite ply (1004), a pleat in the ceramic matrix composite ply (1004) and presence of a foreign object.

The aforementioned methods may further comprise the steps of running (902) a re-compaction path planning application program (1034) at the robot control system (1006) of the layup cell (1000) based on the one or more areas (1204) of the ceramic matrix composite ply (1004) that require re-compaction (1206), the path plan data file (1018) for the ceramic matrix composite ply (1004) and tool design data providing dimensional characteristics of a working surface (1030) for the layup tool (1002) to generate a re-compaction path plan, the tool design data being stored in a tool design data file (1032), at least temporarily storing (904) the re-compaction path plan in a re-compaction path plan data file (1036), and running (906) the compaction application program (1014) at the robot control system (1006) using the re-compaction path plan for automated maneuvering of the compaction roller (1024) to re-compact each area of the ceramic matrix composite ply (1004) that requires re-compaction (1206) on the layup tool (1002). Optionally, this method may further comprise capturing (908) revised image data of the ceramic matrix composite ply (1004) after re-compaction (1206) of the one or more areas (1204) that required re-compaction (1206) using the surface imaging device (1026), at least temporarily storing (910) the revised image data for the ceramic matrix composite ply (1004) in a revised ply image data file (1038) after the re-compaction (1206), and processing (912) the revised ply image data file (1038) to confirm the re-compaction (1206) of the one or more areas (1204) of the ceramic matrix composite ply (1004) was successful.

A method (1100) for operation of a layup cell (1000) during composite manufacturing (see figures) according to an embodiment of the present application comprises running (1102) a compaction application program (1014) using a path plan data file (1018) defining a path plan (1202) for automated manipulation of a compaction roller (1024) for compacting a ceramic matrix composite ply (1004) on a layup tool (1002), capturing (1104) image data of the ceramic matrix composite ply (1004) after compaction on the layup tool (1002), at least temporarily storing (1106) the image data for the ceramic matrix composite ply (1004) after compaction in a ply image data file (1028), processing (1108) the ply image data file (1028) to identify one or more areas (1204) of the ceramic matrix composite ply (1004) that require re-compaction (1206), running (1110) a re-compaction path planning application program (1034) based on the one or more areas (1204) of the ceramic matrix composite ply (1004) that require re-compaction (1206), the path plan data file (1018) for the ceramic matrix composite ply (1004) and tool design data providing dimensional characteristics of a working surface (1030) for the layup tool (1002) to generate a re-compaction path plan, at least temporarily storing (1112) the re-compaction path plan in a re-compaction path plan data file (1036), running (1114) the compaction application program (1014) using the re-compaction path plan data file (1036) for automated maneuvering of the compaction roller (1024) to re-compact each area of the ceramic matrix composite ply (1004) that requires re-compaction (1206) on the layup tool (1002), capturing (1116) revised image data of the ceramic matrix composite ply (1004) after re-compaction (1206) of the one or more areas (1204) that required re-compaction (1206), at least temporarily storing (1118) the revised image data for the ceramic matrix composite ply (1004) in a revised ply image data file (1038) after the re-compaction (1206), and processing (1120) the revised ply image data file (1038) to confirm the re-compaction (1206) of the one or more areas (1204) of the ceramic matrix composite ply (1004) was successful.

Such method may further comprise the further processing of the ply image data file (1028) to confirm acceptable placement of the ceramic matrix composite ply (1004) on the layup tool (1002), the further processing comprising detecting actual placement parameters for the ceramic matrix composite ply (1004) based at least in part on the image data in the ply image data file (1028), comparing the actual placement parameters for the ceramic matrix composite ply (1004) to expected placement parameters for the ceramic matrix composite ply (1004) in the path plan data file (1018) used for the compaction, and determining if the actual placement parameters are within predetermined tolerances of the expected placement parameters based at least in part on the comparing. Optionally, in such method, the processing (1108) of the ply image data file (1028) comprises selecting a portion of the image data in the ply image data file (1028) for inspection of compaction of the ceramic matrix composite ply (1004) in the selected portion, comparing the selected portion of the image data in the ply image data file (1028) to adjacent image data for adjacent portions of the image data, and determining if one or more irregularity is present in the selected portion of the image data based at least in part on the comparing. Optionally, the processing (1108) of the ply image data file (1028) comprises indexing the image data in the ply image data file (1028) to the tool design data in the tool design data file (1032) providing dimensional characteristics of the working surface (1030) for the layup tool (1002) such that image data representing the ceramic matrix composite ply (1004) in the ply image data file (1028) is aligned with tool design data for the working surface (1030) of the layup tool (1002), selecting a portion of the image data in the ply image data file (1028) for inspection of compaction of the ceramic matrix composite ply (1004) in the selected portion in relation to the tool design data for a corresponding portion the working surface (1030) of the layup tool (1002), comparing the selected portion of the image data in the ply image data file (1028) to dimensional characteristics in the tool design data file (1032) for the corresponding portion of the working surface (1030), and determining if one or more irregularity is present in the selected portion of the image data based at least in part on the comparing.

A layup cell (1000) for composite manufacturing (see figures) according to an embodiment of the present application comprises a layup tool (1002), a ceramic matrix composite ply (1004) placed on the layup tool (1002), a robot control system (1006). This robot control system comprises at least one processor (1008) and associated memory (1010), at least one program storage device (1012) in operative communication with the at least one processor (1008) and storing a compaction application program (1014), and at least one data storage device (1016) in operative communication with the at least one processor (1008) and storing a path plan data file (1018). The layup cell further comprises a robotic arm (1020) in operative communication with the robot control system (1006), at least one end effector (1022) attached to the robotic arm (1020). The at least one end effector (1022) comprises a compaction roller (1024) attached to the at least one end effector (1022). The layup cell further comprises a surface imaging device (1026) in operative communication with the robot control system (1006). The at least one processor (1008) is configured to run the compaction application program (1014) on the robot control system (1006) using the path plan data file (1018) for automated manipulation of the robotic arm (1020) and the compaction roller (1024) for compacting the ceramic matrix composite ply (1004) on the layup tool (1002), wherein the robot control system (1006), the at least one processor (1008), and the surface imaging device (1026) are configured to capture image data of the ceramic matrix composite ply (1004) after compaction on the layup tool (1002), wherein the at least one processor (1008) is configured to at least temporarily store the image data for the ceramic matrix composite ply (1004) after compaction in a ply image data file (1028) on the at least one data storage device (1016), and wherein the at least one processor (1008) is configured to process the ply image data file (1028) to identify one or more areas (1204) of the ceramic matrix composite ply (1004) that require re-compaction (1206). The composite manufacturing preferably comprises ceramic matrix composite manufacturing.

The compaction roller (1024) preferably comprises at least one of an approximately 7.6 cm (three inch) roller, a roller having a width ranging between approximately 5.0 cm (two inches) and approximately 10.1 cm (four inches), a roller having a width ranging between approximately 12.7 cm (five inches) and approximately 17.78 cm (seven inches), a roller having a width ranging between approximately 20.3 cm (eight inches) and approximately 25.4 cm (ten inches) and a roller having a width ranging between approximately 27.9 cm (eleven inches) and approximately 33.0 cm (thirteen inches).

The ceramic matrix composite ply (1004) preferably comprises ceramic reinforcement fibers (1208) and a ceramic matrix.

The layup tool (1002) preferably comprises a working surface (1030) upon which the ceramic matrix composite ply (1004) is placed during the composite manufacturing, wherein the working surface (1030) of the layup tool (1002) is preferably three-dimensional and/or preferably comprises at least one of a curved portion, a double curved portion, a contoured portion, a geometrically-shaped portion, a rising ramp portion, a falling ramp portion and a two-dimensional portion.

The surface imaging device (1026) preferably comprises at least one of a three-dimensional camera, a color plus depth camera, a color camera, a depth camera, a depth sensor, a time-of-flight sensor, a red-green-blue plus depth camera, a stereo vision camera, a binocular vision camera, a laser profilometer and a light detection and ranging sensor.

In the illustrated embodiments the at least one processor (1008) is preferably configured to further process the ply image data file (1028) to confirm acceptable placement of the ceramic matrix composite ply (1004) on the layup tool (1002), wherein the at least one processor (1008) is furthermore preferably configured to detect actual placement parameters for the ceramic matrix composite ply (1004) based at least in part on the image data in the ply image data file (1028), compare the actual placement parameters for the ceramic matrix composite ply (1004) to expected placement parameters for the ceramic matrix composite ply (1004) in the path plan data file (1018) used for the compaction, and determine if the actual placement parameters are within predetermined tolerances of the expected placement parameters based at least in part on comparing the actual placement parameters to the expected placement parameters.

Where the actual placement parameters are not within predetermined tolerances of the expected placement parameters, the layup cell (1000) is preferably configured to permit removal of the ceramic matrix composite ply (1004) from the layup tool (1002).

Where the actual placement parameters are within predetermined tolerances of the expected placement parameters, the robot control system (1006) is preferably configured to confirm placement of the ceramic matrix composite ply (1004) on the layup tool (1002) is acceptable.

The at least one processor (1008) of the layup cell is optionally configured to select a portion of the image data in the ply image data file (1028) for inspection of compaction of the ceramic matrix composite ply (1004) in the selected portion, compare the selected portion of the image data in the ply image data file (1028) to adjacent image data for adjacent portions of the image data, and determine if one or more irregularity is present in the selected portion of the image data based at least in part on comparing image data for the selected portion to adjacent image data.

Where one or more irregularity is present, the at least one processor (1008) is preferably configured to compare each of the one or more irregularity to a corresponding predetermined threshold, and determine if each of the one or more irregularity is within an acceptable tolerance of the predetermined threshold.

Where any of the one or more irregularity is not within the acceptable tolerance of the predetermined threshold, the at least one processor (1008) is preferably configured to designate each of the one or more irregularity that is not within the acceptable tolerance of the predetermined threshold for re-compaction (1206) of the corresponding irregularity at the layup cell (1000).

Where the one or more irregularity are within the acceptable tolerance of the predetermined threshold, the at least one processor (1008) is preferably configured to confirm the selected portion of the image data under inspection does not require re-compaction, and repeat selecting of the portion, comparing of the selected portion and determining if one or more irregularity is present for additional portions of the image data in the ply image data file (1028) for inspection of compaction of a remainder of the ceramic matrix composite ply (1004).

Where no irregularity is present in the selected portion of the image data, the at robot control system (1006) is preferably configured to confirm the selected portion of the image data under inspection does not require re-compaction, and repeat selecting of the portion, comparing of the selected portion and determining if one or more irregularity is present for additional portions of the image data in the ply image data file (1028) for inspection of compaction of a remainder of the ceramic matrix composite ply (1004).

The at least one processor (1008) and the at least one data storage device (1016) are preferably configured to index the image data in the ply image data file (1028) to tool design data providing dimensional characteristics of a working surface (1030) for the layup tool (1002) such that image data representing the ceramic matrix composite ply (1004) in the ply image data file (1028) is aligned with tool design data for the working surface (1030) of the layup tool (1002), the tool design data being stored by the at least one data storage device (1016) in a tool design data file (1032), select a portion of the image data in the ply image data file (1028) for inspection of compaction of the ceramic matrix composite ply (1004) in the selected portion in relation to the tool design data for a corresponding portion the working surface (1030) of the layup tool (1002), compare the selected portion of the image data in the ply image data file (1028) to dimensional characteristics in the tool design data file (1032) for the corresponding portion of the working surface (1030), and determine if one or more irregularity is present in the selected portion of the image data based at least in part on comparing the image data of the selected portion to dimensional characteristics of the tool design data file (1032).

Where one or more irregularity is present, the at least one processor (1008) is preferably configured to compare each of the one or more irregularity to a corresponding predetermined threshold, and determine if each of the one or more irregularity is within an acceptable tolerance of the predetermined threshold.

Where any of the one or more irregularity is not within the acceptable tolerance of the predetermined threshold, the at least one processor (1008) is preferably configured to designate each of the one or more irregularity that is not within the acceptable tolerance of the predetermined threshold for re-compaction (1206) of the corresponding irregularity at the layup cell (1000).

Where irregularities of the one or more irregularity are within the acceptable tolerance of the predetermined threshold, the robot control system (1006) is preferably configured to confirm the selected portion of the image data under inspection does not require re-compaction, and repeat selecting of the portion, comparing of the selected portion and determining if one or more irregularity is present for additional portions of the image data in the ply image data file (1028) for inspection of compaction of a remainder of the ceramic matrix composite ply (1004).

Where no irregularity is present in the selected portion of the image data, the robot control system (1006) is preferably configured to confirm the selected portion of the image data under inspection does not require re-compaction, and repeat selecting of the portion, comparing of the selected portion and determining if one or more irregularity is present for additional portions of the image data in the ply image data file (1028) for inspection of compaction of a remainder of the ceramic matrix composite ply (1004).

The at least one processor (1008), the at least one program storage device (1012) and the at least one data storage device (1016) are preferably configured to run a re-compaction path planning application program (1034) based on the one or more areas (1204) of the ceramic matrix composite ply (1004) that require re-compaction (1206), the path plan data file (1018) for the ceramic matrix composite ply (1004) and tool design data providing dimensional characteristics of a working surface (1030) for the layup tool (1002) to generate a re-compaction path plan, the tool design data being stored by the at least one data storage device (1016) in a tool design data file (1032), at least temporarily store the re-compaction path plan in a re-compaction path plan data file (1036), and run the compaction application program (1014) on the robot control system (1006) using the re-compaction path plan data file (1036) for automated maneuvering of the compaction roller (1024) to re-compact each area of the ceramic matrix composite ply (1004) that requires re-compaction (1206) on the layup tool (1002). The robot control system (1006) is optionally configured to capture revised image data of the ceramic matrix composite ply (1004) using the surface imaging device (1026) after re-compaction (1206) of the one or more areas (1204) that required re-compaction (1206), at least temporarily store the revised image data for the ceramic matrix composite ply (1004) after the re-compaction (1206) in a revised ply image data file (1038), and process the revised ply image data file (1038) to confirm the re-compaction (1206) of the one or more areas (1204) of the ceramic matrix composite ply (1004) was successful.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

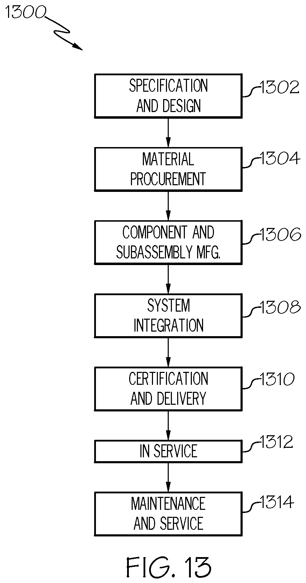

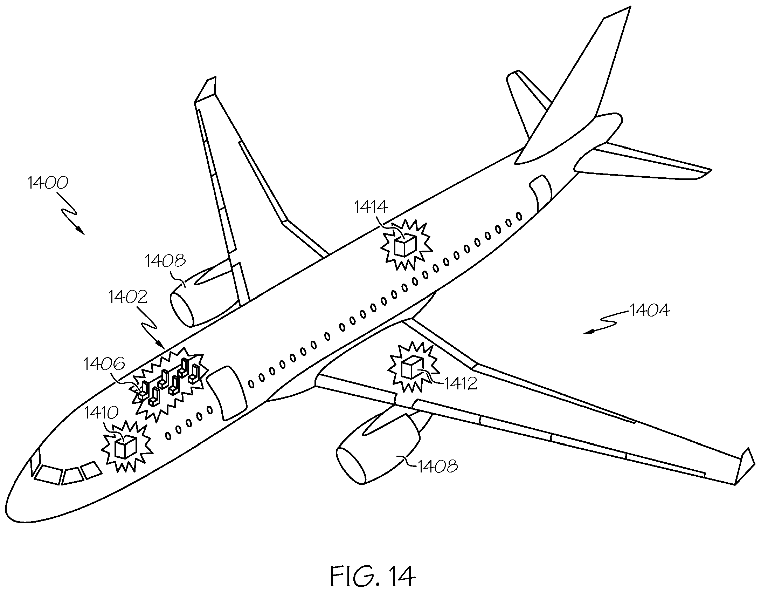

Examples of the subject matter disclosed herein may be described in the context of aircraft manufacturing and service method 1300 as shown in Fig. 13 and aircraft 1400 as shown in Fig. 14. In one or more examples, the disclosed methods and systems for analysis of fastened structures may be used in aircraft manufacturing. During pre-production, the service method 1300 may include specification and design (block 1302) of aircraft 1400 and material procurement (block 1304). During production, component and subassembly manufacturing (block 1306) and system integration (block 1308) of aircraft 1400 may take place. Thereafter, aircraft 1400 may go through certification and delivery (block 1310) to be placed in service (block 1312). While in service, aircraft 1400 may be scheduled for routine maintenance and service (block 1314). Routine maintenance and service may include modification, reconfiguration, refurbishment, etc. of one or more systems of aircraft 1400.

Each of the processes of the service method 1300 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in Fig. 14, aircraft 1400 produced by the service method 1300 may include airframe 1402 with a plurality of high-level systems 1404 and interior 1406. Examples of high-level systems 1404 include one or more of propulsion system 1408, electrical system 1410, hydraulic system 1412, and environmental system 1414. Any number of other systems may be included. Although an aerospace example is shown, the principles disclosed herein may be applied to other industries, such as the automotive industry. Accordingly, in addition to aircraft 1400, the principles disclosed herein may apply to other vehicles, e.g., land vehicles, marine vehicles, space vehicles, etc.

The disclosed methods and systems for analysis of fastened structures may be employed during any one or more of the stages of the manufacturing and service method 1300. For example, components or subassemblies corresponding to component and subassembly manufacturing (block 1306) may be fabricated or manufactured in a manner similar to components or subassemblies produced while aircraft 1400 is in service (block 1312). Also, one or more examples of the tooling set(s), system(s), method(s), or any combination thereof may be utilized during production stages (block 1306 and block 1308), for example, by substantially expediting assembly of or reducing the cost of aircraft 1400. Similarly, one or more examples of the tooling set, system or method realizations, or a combination thereof, may be utilized, for example and without limitation, while aircraft 1400 is in service (block 1312) and/or during maintenance and service (block 1314).

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the methods 100, 900, 1100 for operation of a layup cell during composite manufacturing and layup cells 1000 for composite manufacturing have been shown and described, modifications may occur to those skilled in the art upon reading the specification. The present application includes such modifications and is limited only by the scope of the claims.

## Claims

1. A method (100) for operation of a layup cell (1000) during composite manufacturing, comprising:
running (102) a compaction application program (1014) at a robot control system (1006) of the layup cell (1000) using a path plan data file (1018) defining a path plan (1202) for automated manipulation of a compaction roller (1024) for compacting a ceramic matrix composite ply (1004) on a layup tool (1002);
capturing (104) image data of the ceramic matrix composite ply (1004) after compaction on the layup tool (1002) using a surface imaging device (1026);
at least temporarily storing (106) the image data for the ceramic matrix composite ply (1004) after compaction in a ply image data file (1028); and
processing (108) the ply image data file (1028) to identify one or more areas (1204) of the ceramic matrix composite ply (1004) that require re-compaction (1206),
the method further comprising:
running (902) a re-compaction path planning application program (1034) at the robot control system (1006) of the layup cell (1000) based on the one or more areas (1204) of the ceramic matrix composite ply (1004) that require re-compaction (1206), the path plan data file (1018) for the ceramic matrix composite ply (1004) and tool design data providing dimensional characteristics of a working surface (1030) for the layup tool (1002) to generate a re-compaction path plan, the tool design data being stored in a tool design data file (1032);
at least temporarily storing (904) the re-compaction path plan in a re-compaction path plan data file (1036); and
running (906) the compaction application program (1014) at the robot control system (1006) using the re-compaction path plan for automated maneuvering of the compaction roller (1024) to re-compact each area of the ceramic matrix composite ply (1004) that requires re-compaction (1206) on the layup tool (1002),
performing the re-compaction.

2. The method of claim 1, wherein the composite manufacturing comprises ceramic matrix composite manufacturing.

3. The method of claim 1 or 2, wherein the path plan data file (1018) is tailored for compaction of the ceramic matrix composite ply (1004) on the layup tool (1002) using the compaction roller (1024),and/or
wherein the automated manipulation comprises maneuvering the compaction roller (1024) along the path plan (1202) using a robotic arm (1020).

4. The method of any of the preceding claims, further comprising:
further processing (110) the ply image data file (1028) to confirm acceptable placement of the ceramic matrix composite ply (1004) on the layup tool (1002),wherein the further processing (110) of the ply image data file (1028) preferably comprising:
detecting (202) actual placement parameters for the ceramic matrix composite ply (1004) based at least in part on the image data in the ply image data file (1028);
comparing (204) the actual placement parameters for the ceramic matrix composite ply (1004) to expected placement parameters for the ceramic matrix composite ply (1004) in the path plan data file (1018) used for the compaction; and
determining (206) if the actual placement parameters are within predetermined tolerances of the expected placement parameters based at least in part on the comparing.

5. The method of claim 4, wherein the actual placement parameters comprise at least one of a first position parameter representative of a first corner of the ceramic matrix composite ply (1004), a second position parameter representative of a second corner of the ceramic matrix composite ply (1004), a third position parameter representative of a third corner of the ceramic matrix composite ply (1004), a fourth position parameter representative of a fourth corner of the ceramic matrix composite ply (1004) and an orientation parameter representative of an orientation of ceramic fibers of the ceramic matrix composite ply (1004), and/or wherein the expected placement parameters comprise at least one of a first position parameter representative of a first corner of the ceramic matrix composite ply (1004), a second position parameter representative of a second corner of the ceramic matrix composite ply (1004), a third position parameter representative of a third corner of the ceramic matrix composite ply (1004), a fourth position parameter representative of a fourth corner of the ceramic matrix composite ply (1004) and an orientation parameter representative of an orientation of ceramic fibers of the ceramic matrix composite ply (1004).

6. The method of claim 4 or 5, wherein the predetermined tolerances comprise a range of approximately 4 millimeters to approximately 10 millimeters from corresponding expected placement parameters, and/or wherein the predetermined tolerances comprise a range of approximately 2 degrees to approximately 5 degrees from corresponding expected placement parameters in relation to orientation of ceramic fibers within the ceramic matrix composite ply (1004).

7. The method of any of the preceding claims 4-6, where the actual placement parameters are not within predetermined tolerances of the expected placement parameters, the further processing (110) of the ply image data file (1028) further comprising:
removing (208) the ceramic matrix composite ply (1004) from the layup tool (1002), and/orwhere the actual placement parameters are within predetermined tolerances of the expected placement parameters, the further processing (110) of the ply image data file (1028) further comprising:
confirming (210) placement of the ceramic matrix composite ply (1004) on the layup tool (1002) is acceptable.

8. The method of any of the preceding claims, further comprising:
capturing (908) revised image data of the ceramic matrix composite ply (1004) after re-compaction (1206) of the one or more areas (1204) that required re-compaction (1206) using the surface imaging device (1026);
at least temporarily storing (910) the revised image data for the ceramic matrix composite ply (1004) in a revised ply image data file (1038) after the re-compaction (1206); and
processing (912) the revised ply image data file (1038) to confirm the re-compaction (1206) of the one or more areas (1204) of the ceramic matrix composite ply (1004) was successful.

9. The method (1100) of any of the preceding claims, further comprising:
running (1110) a re-compaction path planning application program (1034) based on the one or more areas (1204) of the ceramic matrix composite ply (1004) that require re-compaction (1206), the path plan data file (1018) for the ceramic matrix composite ply (1004) and tool design data providing dimensional characteristics of a working surface (1030) for the layup tool (1002) to generate a re-compaction path plan;
at least temporarily storing (1112) the re-compaction path plan in a re-compaction path plan data file (1036);
running (1114) the compaction application program (1014) using the re-compaction path plan data file (1036) for automated maneuvering of the compaction roller (1024) to re-compact each area of the ceramic matrix composite ply (1004) that requires re-compaction (1206) on the layup tool (1002);
capturing (1116) revised image data of the ceramic matrix composite ply (1004) after re-compaction (1206) of the one or more areas (1204) that required re-compaction (1206);
at least temporarily storing (1118) the revised image data for the ceramic matrix composite ply (1004) in a revised ply image data file (1038) after the re-compaction (1206); and
processing (1120) the revised ply image data file (1038) to confirm the re-compaction (1206) of the one or more areas (1204) of the ceramic matrix composite ply (1004) was successful.

10. The method of claim 9, further comprising:
further processing the ply image data file (1028) to confirm acceptable placement of the ceramic matrix composite ply (1004) on the layup tool (1002), the further processing comprising:
detecting actual placement parameters for the ceramic matrix composite ply (1004) based at least in part on the image data in the ply image data file (1028);
comparing the actual placement parameters for the ceramic matrix composite ply (1004) to expected placement parameters for the ceramic matrix composite ply (1004) in the path plan data file (1018) used for the compaction; and
determining if the actual placement parameters are within predetermined tolerances of the expected placement parameters based at least in part on the comparing.

11. The method of claim 9 or 10, the processing (1108) of the ply image data file (1028) comprising:
selecting a portion of the image data in the ply image data file (1028) for inspection of compaction of the ceramic matrix composite ply (1004) in the selected portion;
comparing the selected portion of the image data in the ply image data file (1028) to adjacent image data for adjacent portions of the image data; and
determining if one or more irregularity is present in the selected portion of the image data based at least in part on the comparing.

12. The method of claim 9, 10 or 11, the processing (1108) of the ply image data file (1028) comprising:
indexing the image data in the ply image data file (1028) to the tool design data in the tool design data file (1032) providing dimensional characteristics of the working surface (1030) for the layup tool (1002) such that image data representing the ceramic matrix composite ply (1004) in the ply image data file (1028) is aligned with tool design data for the working surface (1030) of the layup tool (1002);
selecting a portion of the image data in the ply image data file (1028) for inspection of compaction of the ceramic matrix composite ply (1004) in the selected portion in relation to the tool design data for a corresponding portion the working surface (1030) of the layup tool (1002);
comparing the selected portion of the image data in the ply image data file (1028) to dimensional characteristics in the tool design data file (1032) for the corresponding portion of the working surface (1030); and
determining if one or more irregularity is present in the selected portion of the image data based at least in part on the comparing.

13. The method of any of the preceding claims, wherein the layup cell for composite manufacturing is provided with:
a layup tool (1002);
a ceramic matrix composite ply (1004) placed on the layup tool (1002);
a robot control system (1006), comprising:
at least one processor (1008) and associated memory (1010);
at least one program storage device (1012) in operative communication with the at least one processor (1008) and storing a compaction application program (1014); and
at least one data storage device (1016) in operative communication with the at least one processor (1008) and storing a path plan data file (1018);
a robotic arm (1020) in operative communication with the robot control system (1006);
at least one end effector (1022) attached to the robotic arm (1020), the at least one end effector (1022) comprising:
a compaction roller (1024) attached to the at least one end effector (1022); and
a surface imaging device (1026) in operative communication with the robot control system (1006), and
wherein the at least one processor (1008) is configured to run the compaction application program (1014) on the robot control system (1006) using the path plan data file (1018) for automated manipulation of the robotic arm (1020) and the compaction roller (1024) for compacting the ceramic matrix composite ply (1004) on the layup tool (1002);
wherein the robot control system (1006), the at least one processor (1008), and the surface imaging device (1026) are configured to capture image data of the ceramic matrix composite ply (1004) after compaction on the layup tool (1002);
wherein the at least one processor (1008) is configured to at least temporarily store the image data for the ceramic matrix composite ply (1004) after compaction in a ply image data file (1028) on the at least one data storage device (1016), and
wherein the at least one processor (1008) is configured to process the ply image data file (1028) to identify one or more areas (1204) of the ceramic matrix composite ply (1004) that require re-compaction (1206).

14. A layup cell (1000) for composite manufacturing, comprising:
a layup tool (1002);
a ceramic matrix composite ply (1004) placed on the layup tool (1002);
a robot control system (1006), comprising:
at least one processor (1008) and associated memory (1010);
at least one program storage device (1012) in operative communication with the at least one processor (1008) and storing a compaction application program (1014); and
at least one data storage device (1016) in operative communication with the at least one processor (1008) and storing a path plan data file (1018);
a robotic arm (1020) in operative communication with the robot control system (1006);
at least one end effector (1022) attached to the robotic arm (1020), the at least one end effector (1022) comprising:
a compaction roller (1024) attached to the at least one end effector (1022); and
a surface imaging device (1026) in operative communication with the robot control system (1006), and
wherein the at least one processor (1008) is configured to run the compaction application program (1014) on the robot control system (1006) using the path plan data file (1018) for automated manipulation of the robotic arm (1020) and the compaction roller (1024) for compacting the ceramic matrix composite ply (1004) on the layup tool (1002);
wherein the robot control system (1006), the at least one processor (1008), and the surface imaging device (1026) are configured to capture image data of the ceramic matrix composite ply (1004) after compaction on the layup tool (1002);
wherein the at least one processor (1008) is configured to at least temporarily store the image data for the ceramic matrix composite ply (1004) after compaction in a ply image data file (1028) on the at least one data storage device (1016), and
wherein the at least one processor (1008) is configured to process the ply image data file (1028) to identify one or more areas (1204) of the ceramic matrix composite ply (1004) that require re-compaction (1206),
wherein the at least one processor (1008), the at least one program storage device (1012) and the at least one data storage device (1016) are configured to:
run a re-compaction path planning application program (1034) based on the one or more areas (1204) of the ceramic matrix composite ply (1004) that require re-compaction (1206), the path plan data file (1018) for the ceramic matrix composite ply (1004) and tool design data providing dimensional characteristics of a working surface (1030) for the layup tool (1002) to generate a re-compaction path plan, the tool design data being stored by the at least one data storage device (1016) in a tool design data file (1032);
at least temporarily store the re-compaction path plan in a re-compaction path plan data file (1036); and
run the compaction application program (1014) on the robot control system (1006) using the re-compaction path plan data file (1036) for automated maneuvering of the compaction roller (1024) to re-compact each area of the ceramic matrix composite ply (1004) that requires re-compaction (1206) on the layup tool (1002).

15. The layup cell of claim 14, wherein the robot control system (1006) is configured to:
capture revised image data of the ceramic matrix composite ply (1004) using the surface imaging device (1026) after re-compaction (1206) of the one or more areas (1204) that required re-compaction (1206);
at least temporarily store the revised image data for the ceramic matrix composite ply (1004) after the re-compaction (1206) in a revised ply image data file (1038); and
process the revised ply image data file (1038) to confirm the re-compaction (1206) of the one or more areas (1204) of the ceramic matrix composite ply (1004) was successful.
